# EUROPÄISCHE PATENTSCHRIFT

(11) **EP 0 464 161 B1**
(45) Veröffentlichungstag und Bekanntmachung des Hinweises auf die Patenterteilung: **26.01.1994**
(21) Anmeldenummer: 90915990.7
(22) Anmeldetag: 12.11.1990
(51) Int. Cl.: C03B 37/15, G02B 6/36, G02B 6/38

(54) **VERFAHREN ZUM ZENTRIEREN EINES LICHTWELLENLEITERS IN EINER BOHRUNG UND VORRICHTUNG ZUR DURCHFÜHRUNG DES VERFAHRENS**
PROCESS FOR ALIGNING AN OPTICAL FIBRE IN A BORE, AND DEVICE FOR CARRYING OUT THE PROCESS
PROCEDE POUR LE CENTRAGE D'UN GUIDE D'ONDES LUMINEUSES DANS UN ORIFICE ET DISPOSITIF POUR LA MISE EN UVRE DU PROCEDE

(30) Priorität: 13.11.1989 CH 4071/89
(43) Veröffentlichungstag der Anmeldung: 08.01.1992
(73) Patentinhaber: HUBER & SUHNER AG, 9100 Herisau (CH)
(72) Erfinder: HEIER, Andreas, CH-9424 Rheineck (CH)
(74) Vertreter: White, William
(86) Internationale Anmeldenummer: CH9000260
(87) Internationale Veröffentlichungsnummer: WO9107355

(56) Entgegenhaltungen:
- EP-A- 0 330 728
- GB-A- 1 479 575
- GB-A- 2 151 042
- US-A- 3 681 164
- Patent Abstracts of Japan, Band 3, Nr. 17 (E-90), 14.02.79 & JP-A-53144348 (NIPPON DENSHIN DENWA KOSHA) 15.12.78
- Patent Abstracts of Japan, Band 6, Nr.92 (P-119)(970), 29.05.82, & JP-A-5727211 (FUJITSU K.K.) 13.02.82
- Patent Abstracts of Japan, Band 7, Nr.30 (P-173)(1175), 05.02.83 & JP-A-57181513 (MITSUBISHI RAYON K.K.) 09.11.82
- Patent Abstracts of Japan, Band 9, Nr.133 (P-362)(1856) 08.06.85, & JP-A-6015608 (HITACHI SEISAKUSHO K.K.) 26.01.85

## Beschreibung

Die Erfindung betrifft ein Verfahren zum Zentrieren eines Lichtwellenleiters in einer Bohrung und eine Vorrichtung zur Durchführung dieses Verfahrens.

Es ist bekannt, dass die Übergangsdämpfung einer Lichtwellenleitungsverbindung, oder allgemein einer LWL-Verbindung, z.B: eines Steckerverbinders oder einer mechanischen Spleissung, von den geometrischen Toleranzen des zylindrischen Lichtwellenleiters einerseits und der Bohrung in der Halterung für den Lichtwellenleiter andererseits abhängt.

Die angewandten Verfahren zur Zentrierung des Lichtwellenleiters in dieser Bohrung haben durchwegs das Ziel, das Spiel zwischen LWL-Aussendurchmesser und Bohrungsdurchmesser zu minimalisieren, im besten Fall aufzuheben. Ein erstes bekanntes Verfahren hiezu ist beispielsweise aus EP-A-213067, (DIAMOND) bekannt und betrifft das Zentrieren des Lichtwellenleiters mittels einer Prägetechnik am Umfang des Bohrungsrandes. Gemäss einem zweiten bekannten Verfahren, wie es in der EP-A-207552, (PHILIPS) beschrieben ist, wird der Steckerstift bezüglich der optischen Achse des LWL-Kerns mechanisch nachbearbeitet. In einem dritten, aus der FR-A-2564210, (RADIALL) bekannten Verfahren wird der zylindrische Umfang der LWL-Endfläche gegen eine konisch ausgebildete Bohrung gepresst.

Im japanischen Dokument JP-A-53-144348 wurde vorgeschlagen, das aus der Hülse hervortretende Ende eines Lichtwellenleiters zu schmelzen, so dass sich ein kugelförmiger Tropfen bildet, um diesen dann in die konische Öffnung der Hülse hineinzuziehen. Das vorstehende Ende wird abgeschliffen und Hülse und Lichtwellenleiter werden daraufhin poliert. Zum Unterschied dazu wird in der GB-A-1 479 575 vorgeschlagen, das kugelige Ende gegen das mit einem Uhrlagerrubinstein mit Durchgangsbohrung verschlossene Ende der Hülse zu pressen und den dadurch gebildeten nietförmigen Kopf abzuschleifen und eben mit der Rubinsteinfläche zu polieren.

In allen Fällen wird also die Zentrierung des Lichtwellenleiters durch Veränderung und Einwirkung der unmittelbaren Umgebung des Lichtwellenleiters erreicht. Auf diese Art lassen sich wohl niedrige Übergangsdämpfungen bei LWL-Verbindungen erreichen. Dazu zeigt aber die industrielle Erfahrung, dass die bei diesen Verfahren notwendigen Verfahrensschritte keine fertigungstechnisch kostengünstigen Abläufe ermöglichen.

Der vorliegenden Erfindung liegt daher die Aufgabe zugrunde, die Nachteile der bekannten Verfahren zum Zentrieren von Lichtwellenleitern in einer Bohrung zu vermeiden und einen Weg aufzuzeigen, auf dem es in kostengünstiger und einfacher Weise möglich ist, einen Lichtwellenleiter durch Aufhebung des Spiels in einer Bohrung zu zentrieren.

Erfindungsgemäß wird diese Aufgabe durch das Verfahren gemäß Anspruch 1 gelöst. Die erfindungsgemäße Vorrichtung zur Durchführung dieses Verfahrens ist im Anspruch 9 definiert.

Die durch die Erfindung erreichten Vorteile sind nicht nur im kostengünstigen, technisch einfachen Zentrierverfahren zu sehen, sondern sie werden durch eine Aufhebung des Spiels zwischen Lichtwellenleiter und Bohrung und ein nachfolgendes Schleifen und Polieren des Lichtwellenleiters sowie durch das Fehlen von Ausbrüchen in der LWL-Stirnfläche begünstigt. Somit werden durch das erfindungsgemässe Verfahren auch nachfolgende Bearbeitungsschritte beeinflusst, was sich insbesondere auf die verbesserte optische Stirnflächengüte des Lichtwellenleiters auswirkt.

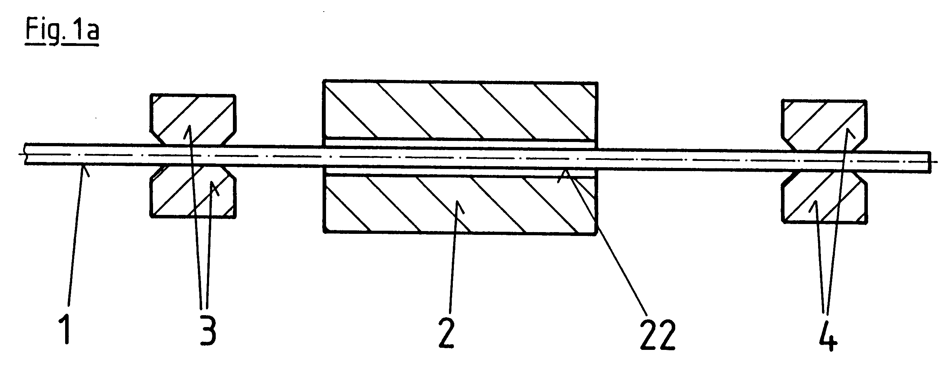

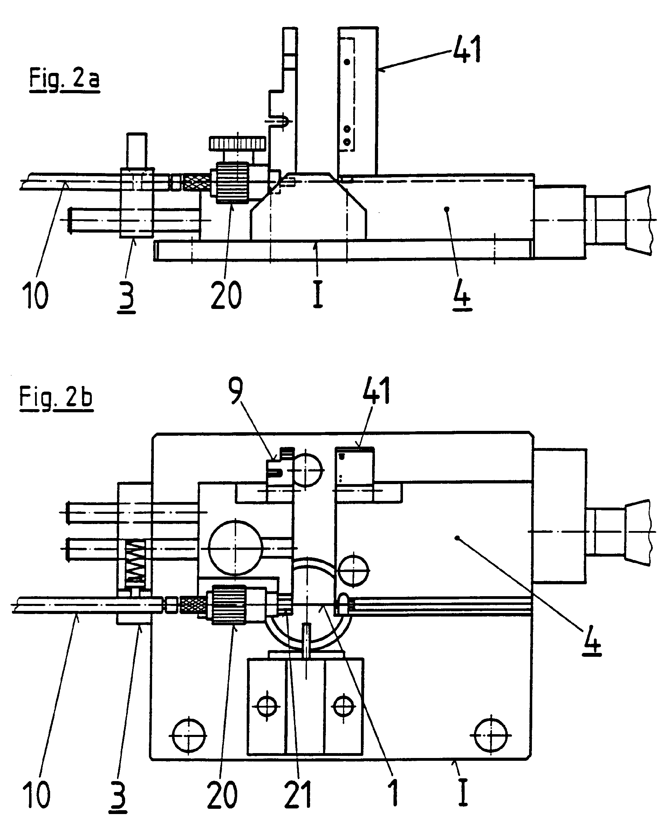

Im folgenden wird die Erfindung anhand eines vorteilhaften Verfahrens und einer ebensolchen Vorrichtung zur Durchführung dieses Verfahrens unter Bezugnahme auf die Zeichnung näher beschrieben. In dieser veranschaulichen Fig. 1a bis 1d die Schritte eines erfindungsgemässen Verfahrens und die Fig. 2a bis 2d eine erfindungsgemässe Vorrichtung zur Durchführung dieses Verfahrens.

Der erste Schritt des erfindungsgemässen Verfahrens geht aus Fig. 1a hervor und beginnt mit dem Einschieben eines Lichtwellenleiters 1 durch eine Bohrung 22 einer LWL-Halterung 2, bei nachfolgendem Schliessen von Klemmbacken 3 und 4 vor und nach der Halterung 2, derart, dass der Lichtwellenleiter 1 zwischen den Klemmbacken 3 und 4 gestreckt gehalten wird. Die LWL-Halterung 2 kann beispielsweise ein Steckerstift sein.

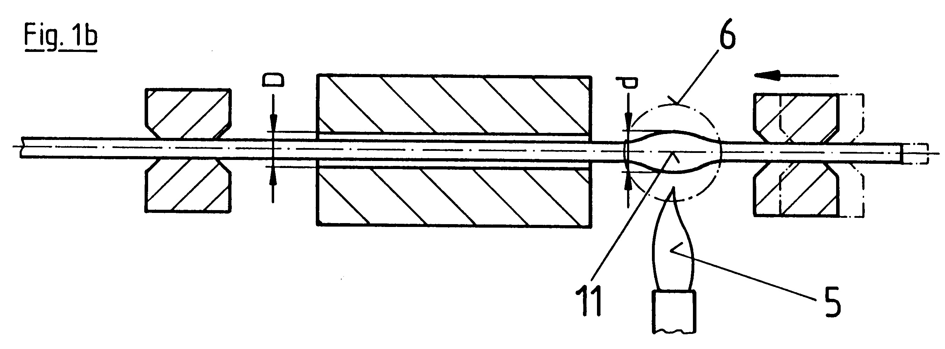

Beim zweiten Schritt des erfindungsgemässen Verfahrens, wie er sich aus Fig. 1b ergibt, wird der Lichtwellenleiter 1 zwischen der LWL-Halterung 2 und den Klemmbacken 4 mittels eines Heizkörpers 5 aufgewärmt. Der Heizkörper 5 kann beispielsweise eine Gasflamme oder ein ionisiertes Gas (Plasma) einer Lichtbogenheizung sein. Bei einer longitudinalen Bewegung der Klemmbacken 4 bezüglich der optischen Achse des Lichtwellenleiters 1 gegen die LWL-Halterung 2, wird der Lichtwellenleiter 1 in der Erwärmungszone 6 soweit aufgestaucht, dass der LWL-Aussendurchmesser d im gestauchten Teil 11 grösser als der Durchmesser D der Bohrung 22 wird.

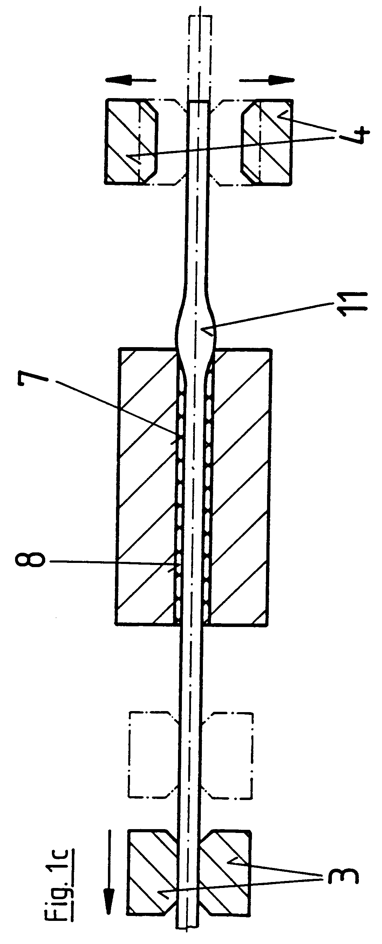

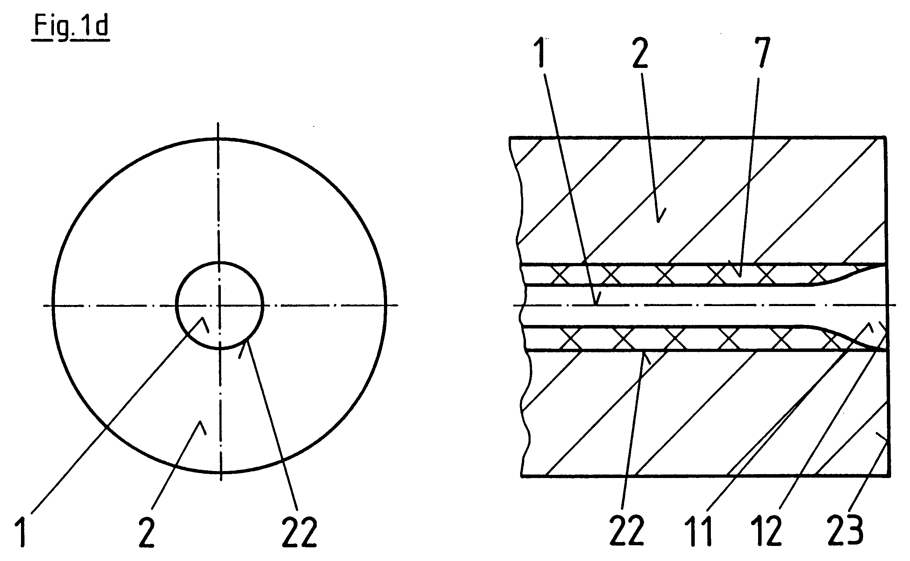

Im dritten Schritt des erfindungsgemässen Verfahrens, wie er sich aus Fig. 1c ergibt, werden die Klemmbacken 4 geöffnet. Die Klemmbacken 3 ziehen den zwischenzeitlich mit Klebstoff 7 versehenen Lichtwellenleiter 1 dann soweit zurück, bis der gestauchte Teil 11 des Lichtwellenleiters 1 das Spiel 8 zwischen der Bohrung 22 und dem Lichtwellenleiter 1 aufhebt.

Figur 1d zeigt nach der Aushärtungszeit des Klebstoffes 7 und einer Schleif/Polierphase, einem weiteren Arbeitsgang, wie das Resultat des erfindungsgemässen Verfahrens sich auf die LWL-Stirnfläche 12 und die Stirnfläche 23 der LWL-Halterung 2 auswirkt.

Die Fig. 2a und 2b zeigen in Seiten- und Aufsicht eine erfindungsgemässe Vorrichtung I, wie sie sich zu Beginn des ersten Schrittes des erfindungsgemässen Verfahrens präsentiert. In beiden Figuren sind ein Lichtwellenleiter 1, ein LWL-Kabel 10, ein LWL-Stecker 20 und beispielhaft ein FC-Steckertyp zusammen mit der Vorrichtung I dargestellt. Das LWL-Kabel 10 ist in den Klemmbacken 3 eingelegt. Die Klemmbacken 3 pressen das LWL-Kabel 10 soweit zusammen, dass der im LWL-Kabel 10 befindliche Lichtwellenleiter 1 durch die Klemmbacken 3 gehalten wird. Die Klemmbacken 4 halten den Lichtwellenleiter 1 in gestrecktem Zustand. In den Figuren 2a und 2b ist die eine Klemmbacke 41 in aufgeklappter Position, zur Einlegung des Lichtwellenleiter 1, dargestellt. Ein Klemmbügel 9 fixiert einen Steckerstift 21 des Steckers 20. Es ist naheliegend, dass der Steckerstift 21 auch eine Spleisshülse eines mechanischen Spleisses sein kann.

Die Vorrichtung I ist durch ihre konstruktiven Merkmale zur Durchführung des Verfahrens nicht auf die vorstehend erwähnten LWL-Halterungen beschränkt. Es sind daher Ausführungsformen der Vorrichtung denkbar, deren Konstruktionselemente von der hier aufgezeigten Ausführungsart abweicht, aber dennoch die erfindungsgemässen Verfahrensschritte beinhalten.

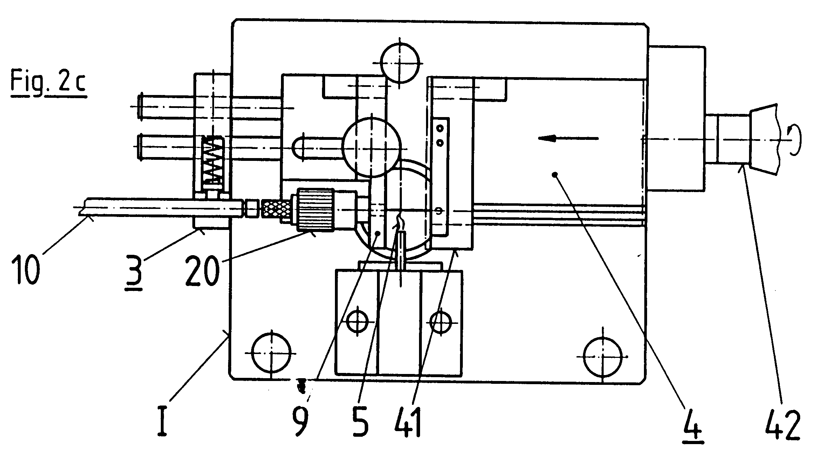

Die Fig. 2c zeigt die Vorrichtung I beim zweiten Schritt des erfindungsgemässen Verfahrens. Die Gasflamme als Heizkörper 5 erwärmt den Lichtwellenleiter 1 bis an den Erweichungspunkt. Mit einer Spindel 42 werden die Klemmbacken 4 gegen den Steckerstift 21 bewegt.

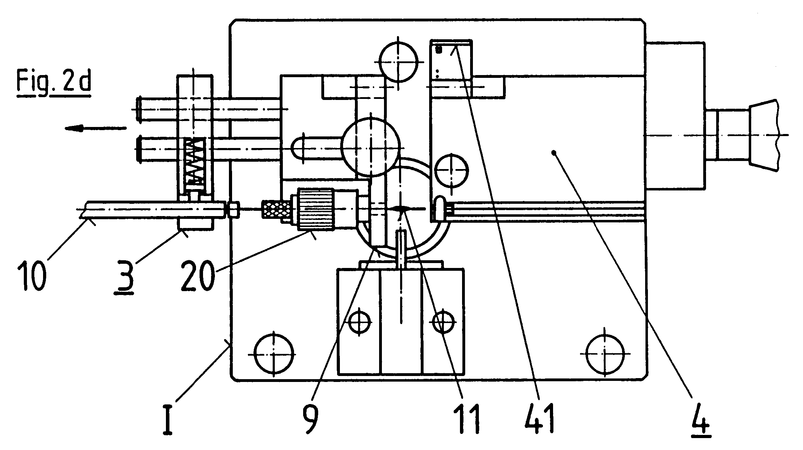

Die Fig. 2d illustriert den dritten Schritt des erfindungsgemässen Verfahrens. Die Klemmbacken 3 bewegen das LWL-Kabel 10, dessen in den Stecker 20 zu liegen kommender Teil mit Klebstoff umgeben worden ist, soweit vom LWL-Stecker 20 weg, bis der gestauchte Teil 22 des Lichtwellenleiters 1 das Spiel in der Bohrung im Steckerstift 21 aufhebt. Der Fachmann erkennt, dass das erfindungsgemässe Verfahren sowie die erfindungsgemässe Vorrichtung zur Durchführung dieses Verfahrens wesentliche Vorteile gegenüber den bisher üblichen Verfahren zum Zentrieren eines Lichtwellenleiters in einer Bohrung aufweisen, ermöglichen sie doch ein rationelles und kostengünstiges Vorgehen, das eine praktisch perfekte Zentrierung des Lichtwellenleiters in der Bohrung garantiert.

## Patentansprüche

1. Verfahren zum zentrieren eines Lichtwellenleiters (1) in einer Bohrung (22), wobei ein erster Verfahrensschritt darin besteht, dass der Lichtwellenleiter (1) durch die Bohrung (22) einer LWL-Halterung (2) geschoben wird und mit dem nachfolgenden Schliessen von Klemmbacken (3) vor der LWL-Halterung (2) und von Klemmbacken (4) nach der LWL-Halterung (2) der Lichtwellenleiter (1) in gestrecktem Zustand gehalten wird, ein zweiter Verfahrensschritt darin besteht, dass der Lichtwellenleiter (1) zwischen der LWL-Halterung (2) und den danach angeordneten Klemmbacken (4) mittels eines Heizkörpers (5) aufgewärmt wird und anschliessend durch eine longitudinale Bewegung der genannten, nach der LWL-Halterung (2) angeordneten Klemmbacken (4) bezüglich der optischen Achse des Lichtwellenleiters (1) gegen die LWL-Halterung (2) der Lichtwellenleiter (1) in der Erwärmungszone (6) soweit aufgestaucht wird, dass der LWL-Durchmesser (d) im gestauchten Teil (11) grösser ist, als der Durchmesser (D) der Bohrung (22), ein dritter Verfahrensschritt darin besteht, dass die nach der LWL-Halterung (2) angeordneten Klemmbacken (4) geöffnet werden und die vor der LWL-Halterung (2) angeordneten Klemmbacken (3) den zwischenzeitlich mit Klebstoff (7) versehenen Lichtwellenleiter (1) soweit zurückziehen, bis der gestauchte Teil (11) des Lichtwellenleiters (1) das Spiel (8) zwischen der Bohrung (22) und dem Lichtwellenleiter (1) aufhebt, und während eines weiteren Arbeitsganges die Stirnfläche (23) der LWL-Halterung (2) und die LWL-Stirnfläche (12) gemeinsam geschliffen und poliert werden, so dass die Aufhebung des Spiels (8) keine Ausbrüche in der LWL-Stirnfläche (12) entstehen lässt.

2. Verfahren nach Patentanspruch 1, dadurch gekennzeichnet, dass ein Lichtwellenleiter (1) verwendet wird, der aus synthetischem Quarzglas besteht.

3. Verfahren nach Patentanspruch 1, dadurch gekennzeichnet, dass ein Lichtwellenleiter (1) verwendet wird, der aus einem organischen Kunststoffmaterial besteht.

4. Verfahren nach Patentanspruch 3, dadurch gekennzeichnet, dass das Kunststoffmaterial Polymethylmethacrylat (PMMA) ist.

5. Verfahren nach Patentanspruch 1, dadurch gekennzeichnet, dass die LWL-Halterung (2) ein Steckerstift ist.

6. Verfahren nach Patentanspruch 1, dadurch gekennzeichnet, dass die LWL-Halterung (2) ein mechanischer Spleiss ist.

7. Verfahren nach Patentanspruch 1, dadurch gekennzeichnet, dass als Heizkörper (5) eine Gasflamme verwendet wird.

8. Verfahren nach Patentanspruch 1, dadurch gekennzeichnet, dass als Heizkörper (5) ein ionisiertes Gas einer Lichtbogenheizung verwendet wird.

9. Vorrichtung zur Durchführung des Verfahrens nach Patentanspruch 1, welche Vorrichtung Klemmbacken (3) enthält, mittels welchen ein LWL-Kabel (10) auf der einen Seite einer LWL-Halterung (2) gehalten werden kann die Vorrichtung ferner einen Klemmbügel (9) umfasst, um die LWL-Halterung, wie z.B. einen Steckerstift (21) eines LWL-Steckers (20), zu fixieren die Vorrichtung weiter eine Spindel (42) aufweist, um die auf der anderen Seite der LWL-Halterung (2) angeordneten Klemmbacken (4) mit ausklappbarer Backe (41) gegen den Steckerstift (21) zu bewegen, ferner ein Heizkörper (5) zur Erwärmung des Lichtwellenleiters (1) bis zu seiner Erweichung zwischen den vor und den hinter der LWL-Halterung (2) angeordneten Klemmbacken (3,4) vorhanden ist, und die auf der vorderen Seite der LWL-Halterung (2) angeordneten Klemmbacken (3) so ausgebildet sind, daß das LWL-Kabel (10) vom LWL-Stecker (20) wegbewogen werden kann.

10. Vorrichtung nach Patentanspruch 9, dadurch gekennzeichnet, dass der Steckerstift (21) des LWL-Steckers (20) eine Spleisshülse für eine mechanische Spleissung ist.

## Claims

1. Method for centring an optical fibre (1) in a bore (22), in which method a first method step comprises pushing the optical fibre (1) through the bore (22) of an optical fibre mount (2) and holding the optical fibre (1) in a stretched state by means of the subsequent closure of clamping jaws (3) before the optical fibre mount (2) and of clamping jaws (4) after the optical fibre mount (2), in which a second method step comprises using a heater (5) to heat up the optical fibre (1) between the optical fibre mount (2) and the clamping jaws (4) arranged thereafter and subsequently by means of a longitudinal movement of the said clamping jaws (4) arranged after the optical fibre mount (2) compressing the optical fibre (1) in the heating zone (6) to such an extent relative to the optical axis of the optical fibre (1) towards the optical fibre mount (2) that the optical fibre diameter (d) is larger in the compressed part (11) than the diameter (D) of the bore (22), in which a third method step comprises opening the clamping jaws (4) arranged after the optical fibre mount (2) and retracting the clamping jaws (3) arranged before the optical fibre mount (2) from the optical fibre (1), which has meantime been provided with adhesive (7), so far that the compressed part (11) of the optical fibre (1) cancels the play (8) between the bore (22) and the optical fibre (1), and in which during a further operation the end face (23) of the optical fibre mount (2) and the optical fibre end face (12) are jointly ground and polished so that the cancellation of the play (8) does not give rise to any chips in the optical fibre end face (12).

2. Method according to Patent Claim 1, characterized in that use is made of an optical fibre (1) which consists of synthetic quartz glass.

3. Method according to Patent Claim 1, characterized in that use is made of an optical fibre (1) which consists of an organic plastic material.

4. Method according to Patent Claim 3, characterized in that the plastic material is polymethylmethacrylate (PMMA).

5. Method according to Patent Claim 1, characterized in that the optical fibre mount (2) is a plug pin.

6. Method according to Patent Claim 1, characterized in that the optical fibre mount (2) is a mechanical splice.

7. Method according to Patent Claim 1, characterized in that a gas flame is used as the heater (5).

8. Method according to Patent Claim 1, characterized in that an ionized gas of an electric arc heating system is used as the heater (5).

9. Device for carrying out the method according to Patent Claim 1, which device contains clamping jaws (3) by means of which an optical fibre cable (10) can be held on one side of an optical fibre mount (2), the device further comprises a clamping bracket (9) for the purpose of fixing the optical fibre mount, such as a plug pin (21) of an optical fibre plug (20), for example, and the device further has a spindle (42) for the purpose of moving the clamping jaws (4) which are arranged on the other side of the optical fibre mount (2) and have a jaw (41) which can be folded out, against the plug pin (21), a heater (5) is provided, furthermore, for heating the optical fibre (1) until it softens between the clamping jaws (3, 4) arranged before and after the optical fibre mount (2), and the clamping jaws (3) arranged on the front side of the optical fibre mount (2) are constructed in such a way that the optical fibre cable (10) can be moved away from the optical fibre plug (20).

10. Device according to Patent Claim 9, characterized in that the plug pin (21) of the optical fibre plug (20) is a splicing sleeve for a mechanical splice.

## Revendications

1. Procédé de centrage d'un guide d'ondes lumineuses (1) dans un alésage (22), une première étape du procédé consistant en ce que le guide d'ondes lumineuses (1) est poussé dans l'alésage (22) d'un raccord (2) de guide d'ondes lumineuses et le guide d'ondes lumineuses (1) est maintenu à l'état étiré avec la fermeture subséquente par les mâchoires de serrage (3) avant le raccord (2) du guide d'ondes lumineuses et par les mâchoires de serrage (4) après le raccord (2) du guide d'ondes lumineuses, une deuxième étape du procédé consistant en ce que le guide d'ondes lumineuses (1) est chauffé entre le raccord (2) du guide d'ondes lumineuses et les mâchoires de serrage (4) subséquentes au moyen d'un élément de chauffage (5) et le guide d'ondes lumineuses (1) étant ensuite refoulé dans la zone de chauffage (6) par un mouvement longitudinal des mâchoires de serrage (4) citées disposées après le raccord (2) du guide d'ondes lumineuses par rapport à l'axe optique du guide d'ondes lumineuses (1) contre le raccord (2) du guide d'ondes lumineuses jusqu'à ce que le diamètre (d) du guide d'ondes lumineuses dans la partie (refoulée) (11) soit supérieur au diamètre (D) de l'alésage (22), une troisième étape du procédé consistant en ce que les mâchoires de serrage (4) disposées après le raccord (2) du guide d'ondes lumineuses sont ouvertes et les mâchoires de serrage (3) disposées avant le raccord (2) du guide d'ondes lumineuses retirent le guide d'ondes lumineuses (1) enduit entre-temps d'adhésif (7) jusqu'à ce que la partie refoulée (11) du guide d'ondes lumineuses (1) supprime le jeu (8) entre l'alésage (22) et le guide d'ondes lumineuses (1) et, pendant une autre étape de travail, la face d'about (23) du raccord (2) du guide d'ondes lumineuses et la face d'about (12) du guide d'ondes lumineuses sont poncées et polies ensemble, de sorte que la suppression du jeu (8) n'entraîne pas de creux dans la face d'about (12) du guide d'ondes lumineuses.

2. Procédé selon la revendication 1, caractérisé en ce qu'il met en oeuvre un guide d'ondes lumineuses (1) qui se compose de verre de quartz synthétique.

3. Procédé selon la revendication 1, caractérisé en ce qu'il met en oeuvre un guide d'ondes lumineuses (1) qui se compose d'un matériau plastique organique.

4. Procédé selon la revendication 3, caractérisé en ce que le matériau plastique est du polyméthylméthacrylate (PMMA).

5. Procédé selon la revendication 1, caractérisé en ce que le raccord (2) du guide d'ondes lumineuses est une pointe de contact.

6. Procédé selon la revendication 1, caractérisé en ce que le raccord (2) du guide d'ondes lumineuses est une épissure mécanique.

7. Procédé selon la revendication 1, caractérisé en ce qu'une flamme de gaz est utilisée comme élément chauffant (5).

8. Procédé selon la revendication 1, caractérisé en ce qu'un gaz ionisé d'un chauffage à l'arc est utilisé comme élément chauffant (5).

9. Dispositif d'exécution du procédé selon la revendication 1, contenant des mâchoires de serrage (3) au moyen desquelles un câble (10) de guide d'ondes lumineuses peut être maintenu d'un côté d'un raccord (2) de guide d'ondes lumineuses, lequel dispositif comprend, par ailleurs, un étrier de serrage (9) pour fixer le raccord (2) du guide d'ondes lumineuses, comme par exemple une pointe de contact (21) d'un connecteur (20) d'un guide d'ondes lumineuses, le dispositif présente, par ailleurs, une broche (42) pour déplacer contre la pointe de contact du connecteur (21) les mâchoires de serrage (4) disposées de l'autre côté du raccord (2) du guide d'ondes lumineuses avec une mâchoire rabattable (41), de plus, un élément chauffant (5) est présent pour le chauffage du guide d'ondes lumineuses (1) jusqu'à son ramollissement entre les mâchoires de serrage (3, 4) disposées devant et derrière le raccord (2) du guide d'ondes lumineuses, et les mâchoires de serrage (3) disposées sur la face antérieure du raccord (2) du guide d'ondes lumineuses sont conçues de telle sorte que le câble (10) du guide d'ondes lumineuses puisse être écarté du connecteur (20) du guide d'ondes lumineuses.

10. Dispositif selon la revendication 9, caractérisé en ce que la pointe de contact (21) du connecteur (20) du guide d'ondes lumineuses est un manchon pour une épissure mécanique.
